(19) **Europäisches Patentamt**

**European Patent Office**

**Office européen des brevets**

(11) **EP 1 367 765 B1**

(12) **FASCICULE DE BREVET EUROPEEN**

(45) Date de publication et mention
de la délivrance du brevet:
**20.09.2006 Bulletin 2006/38**

(51) Int Cl.:
*H04L 12/18* (2006.01)     *H04H 1/02* (2006.01)

(21) Numéro de dépôt: **03291146.3**

(22) Date de dépôt: **16.05.2003**

(54) **Procédé de transmission optimisé de contenus multimedia**

Verfahren zur optimierten Übertragung von Multimediainhalten

Process for optimised transmission of multimedia contents

(84) Etats contractants désignés:
**AT BE BG CH CY CZ DE DK EE ES FI FR GB GR
HU IE IT LI LU MC NL PT RO SE SI SK TR**

(30) Priorité: **27.05.2002 FR 0206426**

(43) Date de publication de la demande:
**03.12.2003 Bulletin 2003/49**

(73) Titulaire: **ALCATEL**
**75008 Paris (FR)**

(72) Inventeurs:
• **Chuberre, Nicolas**
 **31170 Tournefeuille (FR)**
• **Farineau, Jean**
 **92300 Levallois Perret (FR)**
• **Nussli, Christophe**
 **31400 Toulouse (FR)**

(74) Mandataire: **Chaffraix, Sylvain**
**COMPAGNIE FINANCIERE ALCATEL**
**Département Propriété Industrielle**
**54, rue La Boétie**
**75008 Paris (FR)**

(56) Documents cités:
 EP-A- 0 817 412     DE-A- 4 440 419
 FR-A- 2 809 557     US-A- 6 029 195

• ROY D K ET AL: "NEWSCOMM: A HAND-HELD
 INTERFACE FOR INTERACTIVE ACCESS TO
 STRUCTURED AUDIO" COMMON GROUND. CHI
 '96 CONFERENCE PROCEEDINGS.
 CONFERENCE ON HUMAN FACTORS IN
 COMPUTING SYSTEMS. VANCOUVER, APRIL 13
 - 18, 1996, CONFERENCE ON HUMAN FACTORS
 IN COMPUTING SYSTEMS, NEW YORK, ACM, US,
 13 avril 1996 (1996-04-13), pages 173-180,
 XP000657816 ISBN: 0-201-94687-4

**Description**

La présente invention concerne un procédé de transmission optimisé d'informations collectives de contenus multimédia entre un émetteur de contenus multimédia et un récepteur de ces contenus multimédia au sein d'un réseau de radiocommunications.

Un example d'un tel système se trouve dans la publication FR 2809557 du 30 novembre 2001, et aussi dans DE4440419 du 9 mai 1996.

Un tel récepteur tel qu'énoncé ci-dessus peut être relié à un réseau de diffusion radio assurant une diffusion d'informations collectives. Ce système est basé sur un réseau d'émetteurs terrestres ou sur des satellites de diffusion de type géostationnaires ou non, ou encore sur une combinaison de satellites de diffusion et de répéteurs terrestres.

Au sens de la présente description, on entend par informations collectives des informations intéressant tout ou partie des utilisateurs d'un système de radiocommunications.

Il existe aujourd'hui différentes normes connues en soi pour les systèmes et architectures de téléphonie mobile. On dénombre notamment le GSM ("Global System for Mobile télécommunications" en anglais), et, plus récemment, la norme de transmission mobile à haut débit dite 3G (pour 3ème génération) également appelée en Europe UMTS ("Universal Mobile Telecommunication System" en anglais). Sous l'appellation réseau GSM, on entend également les services et les améliorations GPRS et GERAN connus en soi.

Ces normes permettent, dans l'ordre dans lesquelles elles ont été citées, de bénéficier de débits de transmission de plus en plus élevés pour le transport voix/données, et ce pour des liaisons point à point (c'est à dire pour une communication entre deux abonnés).

Cependant, jusqu'à présent, peu de solutions ont été apportées pour la diffusion d'informations collectives de contenu multimedia et ces normes sont mal adaptées à cette fin .

On désigne généralement ce type de diffusion par les termes de "broadcast", lorsqu'il s'agit d'une diffusion sans discrimination sur l'ensemble d'une population d'abonnés d'un réseau cellulaire de radiocommunications, et de "multicast" lorsque les destinataires des informations sont un sous-ensemble de cette population. Dans ce dernier cas, ce sous-ensemble peut être défini par une souscription à un abonnement correspondant, par exemple.

Récemment, la Demanderesse contribue à l'élaboration d'un système de diffusion vers des terminaux mobiles 3G, système dénommé SDMB (pour "Satellite Digital Multimedia Broadcast"). Ce système assure une livraison de contenu multimedia vers les terminaux mobiles 3G.

Ce système s'appuie sur un satellite géostationnaire diffusant sur l'Europe un signal compatible de la forme d'onde normalisée W-CDMA et utilisée dans les réseaux cellulaires terrestres de type UMTS. Il opère dans les bandes de la composante satellite de l'IMT2000 adjacente aux bandes terrestres IMT2000. Afin d'assurer une couverture dans les zones urbaines et sub-urbaines, le système prévoit également de déployer des répéteurs terrestres. Dans ce système, les terminaux sont conçus pour opérer dans les réseaux cellulaires terrestres et pour recevoir le signal satellite SDMB.

Dans ce contexte, le système SDMB coopère avec les réseaux cellulaires pour offrir un service de livraison et d'acheminement de contenu multimédia à faible coût sur une couverture européenne.

La couche de transport du système SDMB implémente :

- des mécanismes de protection préventifs de perte de contenu basés sur l'utilisation de techniques connues dites de FEC ("Forward Error Correction" en anglais) court et long terme, voire de retransmission type carrousel pour pallier les erreurs de transmission causées principalement par le blocage du lien de service satellite quand le terminal passe derrière un obstacle tel qu'un tunnel, un bâtiment, un arbre, etc.
- des mécanismes de protection réactifs qui tiennent compte à posteriori des erreurs de transmission. Ces derniers incluent des mécanismes d'ajustement de la profondeur de FEC et, en dernier recours, la possibilité de procéder à des requêtes de récupération des blocs de contenu perdus au cours de la transmission.

La couche de transport du système SDMB utilise une combinaison des mécanismes précités avec une consommation de la bande passante, à la fois sur le segment satellite et dans les réseaux cellulaires pour les accès de la voie retour, qui sera fonction de la garantie d'acheminement requise.

Dans le cas d'une garantie d'acheminement élevée et en considérant un déploiement restreint de répéteurs terrestres, les accès de la voie retour d'un terminal par les réseaux cellulaires risquent fortement d'être sollicités. Ceci pénalise l'un des objectifs du système de réduction de coût de transmission.

Pour remédier à ce problème, il est possible d'agir sur les mécanismes de transport préventifs en augmentant la profondeur des FEC. Cependant, cette solution conduit à l'augmentation de la bande passante consommée pour la transmission d'un contenu.

Une autre solution consiste à ne requérir la retransmission des blocs perdus qu'au moment où l'utilisateur souhaite accéder au contenu. Cependant, le bénéfice de la livraison de contenu qui vise à réduire de façon statistique le temps d'accès aux contenus est perdu.

La présente invention vise à résoudre les problèmes ci-dessus.

A cet effet, l'invention a pour objet un procédé de transmission optimisé de contenus multimédia au sein d'un réseau de radiocommunications entre un émetteur de contenus multimédia et un récepteur de ces contenus multimédia, caractérisé en ce que le procédé comporte les étapes suivantes :

- une étape de transmission de l'émetteur et à destination du récepteur, d'un vecteur de description d'un contenu multimédia,
- une étape de calcul d'un score de pertinence de ce contenu provenant du vecteur de description et établi en fonction du profil d'utilisateur associé à l'utilisateur du récepteur,
- une étape de récupération du ou des blocs du contenu non reçus par le récepteur sur requête explicite du récepteur, la priorité de cette récupération étant indexée sur le score de pertinence associé au contenu auquel appartient le bloc manquant.

Ainsi, l'esprit de l'invention consiste à tenir compte du score de pertinence des contenus, celui-ci étant établi à partir du profil défini pour l'utilisateur concerné. Ainsi plus un contenu présentera un score de pertinence élevé, plus on sollicitera de façon anticipée la voie retour pour récupérer les blocs manquants éventuels.

Selon un mode de réalisation, l'étape de récupération est déclenchée selon la valeur du score associée au contenu, étant donné que toute valeur supérieure ou égale à un premier seuil dit score maximum entraîne la récupération immédiate à la détection de blocs non reçus, toute valeur inférieure au score maximum mais supérieure ou égale à un second seuil dit score moyen provoque la récupération des blocs manquants à des heures préprogrammées considérées de moindre charge pour le réseau, et toute valeur inférieure au score moyen mais supérieure ou égale à une troisième valeur dit score minimum n'entraîne la récupération des blocs manquants que sur requête d'accès au contenu par l'utilisateur.

Selon un mode de réalisation, lesdits seuils sont mis à jour de façon dynamique en fonction du taux de remplissage de la mémoire locale du récepteur de manière à ce que la somme des tailles mémoires nécessaire à l'enregistrement des contenus reçus dans la mémoire cache soit inférieure à la capacité de la mémoire cache.

Selon un mode de réalisation, l'étape de récupération n'est déclenchée que suite à une détection de blocs manquants consécutivement à la période prévue de réception de tous les blocs relatifs au contenu.

Dans le but de mieux faire comprendre l'invention, on va en décrire maintenant plusieurs modes de mise en oeuvre donnés à titre d'exemples non limitatifs de la portée de l'invention, en référence aux dessins annexés dans lesquels :

- la figure 1 est une vue schématique d'un système permettant la diffusion et la réception de contenus conformément à l'invention,
- la figure 2 est un organigramme représentant les différentes étapes de cheminement des contenus selon l'invention,
- les figures 3, 4 et 5 représentent une arborescence de classification de contenus, à différentes étapes du processus d'apprentissage du profil d'utilisateur,
- la figure 6 représente une table de vecteurs de description de contenus triés par niveau d'intérêt décroissant,
- la figure 7 représente l'organigramme correspondant à l'algorithme de décision de récupération de blocs manquants selon l'invention.

En premier lieu, concernant le profil d'utilisateur compris dans le récepteur, on peut prévoir que le récepteur comporte initialement un profil type à partir duquel il réalise les premières sélections de contenus pour les proposer à l'utilisateur local.

Par exemple, certains profils peuvent être orientés vers des informations à caractère sportif et économique, sans que les critères de sélection ne soient spécifiés en ce qui concerne des niveaux de détail plus fins de ces deux domaines.

Dans un mode de réalisation particulier, le profil type est chargé dans le récepteur au moyen d'un dispositif amovible, de type carte magnétique, carte à puce ou tout moyen similaire de stockage permanent.

Un tel dispositif amovible utilisé pour le chargement du profil type peut incorporer des données de type :

- droit d'accès au réseau,
- droit d'accès à la source de diffusion,
- droits d'archivage définitif ou temporaire en fonction de la nature des éléments d'information,
- informations relatives à la durée et à l'étendue de ces droits d'accès et d'archivage local,
- clés de chiffrement / déchiffrement pour les échanges d'information avec la source de diffusion,
- profils disponibles en cas de multiplicité de profils type.

Dans un mode de réalisation particulier, le profil de chaque utilisateur est construit de manière incrémentale et implicite, à partir d'un profil type, en fonction de la nature des consultations des contenus opérées par l'utilisateur parmi les contenus sélectionnés par le récepteur, la nature de l'accès effectué par l'utilisateur - lecture complète, lecture partielle, saut direct au contenu d'information suivant - permettant de procéder à l'actualisation du profil que le récepteur lui associe, à savoir respectivement incrémentation, maintien sans modification, décrémentation du niveau d'intérêt associé à la classe de contenus considérée.

Le profil d'utilisateur actualisé au cours des accès opérés par l'utilisateur peut être transféré sur un support amovible de type carte magnétique, carte à puce ou tout moyen similaire de stockage permanent, en vue de pouvoir être réutilisé sur un autre récepteur.

De façon générale, le récepteur met en oeuvre des mécanismes d'acquisition de profil pour réaliser le filtrage des contenus multimédia diffusés en permanence par la gateway. Ces mécanismes peuvent être également utilisés pour caractériser l'audience et permettre une modulation tarifaire des contenus.

L'acquisition du profil peut être :

- de type manuel et déclaratif, avec une déclaration de la part de l'utilisateur de son propre profil,
- de type automatique, avec un apprentissage dynamique basé sur l'exploitation des contenus multimédia reçus, tel que décrit dans la demande de brevet français n°00 06 691 déposée par la Demanderesse le 25 mai 2000,
- une combinaison des deux modes précédents, à savoir de type mixte déclaratif et automatique pour accélérer le processus d'apprentissage des caractéristiques fondamentales de l'utilisateur.

Ce profil reflète ainsi les centres d'intérêt de l'utilisateur ainsi que son contexte d'utilisation.

Parmi les centres d'intérêt que l'on pourra classer selon une arborescence, on peut citer, comme déjà mentionné, quelques exemples de rubriques: la musique, le cinéma, le sport, la politique, les cultures régionales.

Le contexte d'utilisation reflète en quelque sorte le comportement de l'utilisateur et son environnement.

Un moyen d'affiner le contexte est de distinguer le contexte court terme du contexte long terme.

Par exemple, le contexte court terme sera qualifié par la date et l'heure courante, la position géographique.

En revanche, le contexte long terme pourrait être caractérisé par :

- la mobilité du récepteur qu'on peut définir par le kilométrage parcouru, le rayon de déplacement du récepteur,
- les heures d'utilisation du récepteur,
- le type de récepteur, à savoir ses capacités multimédia et sa taille de mémoire cache.

On peut également y ajouter des informations de type socio-culturelles basées sur la langue de l'utilisateur, son âge,etc.

On notera que, nonobstant l'accessibilité de la plupart de ces informations, l'acquisition de certaines d'entre elles fait l'objet de restrictions. Ainsi, la position géographique ainsi que la mobilité nécessite le couplage du récepteur avec un module de localisation du type GNSS (Global Navigation Satellite System en anglais) ou nécessite la fourniture par le réseau cellulaire des coordonnées du récepteur et de moyens d'interprétration de ces coordonnées par le récepteur.

Le filtrage pourra exploiter la connaissance du contexte de l'utilisateur pour affiner le ciblage. En effet, un utilisateur de type très nomade et noctambule ne sera pas forcément réceptif aux même informations qu'un utilisateur sédentaire dans une ville d'une grande dimension.

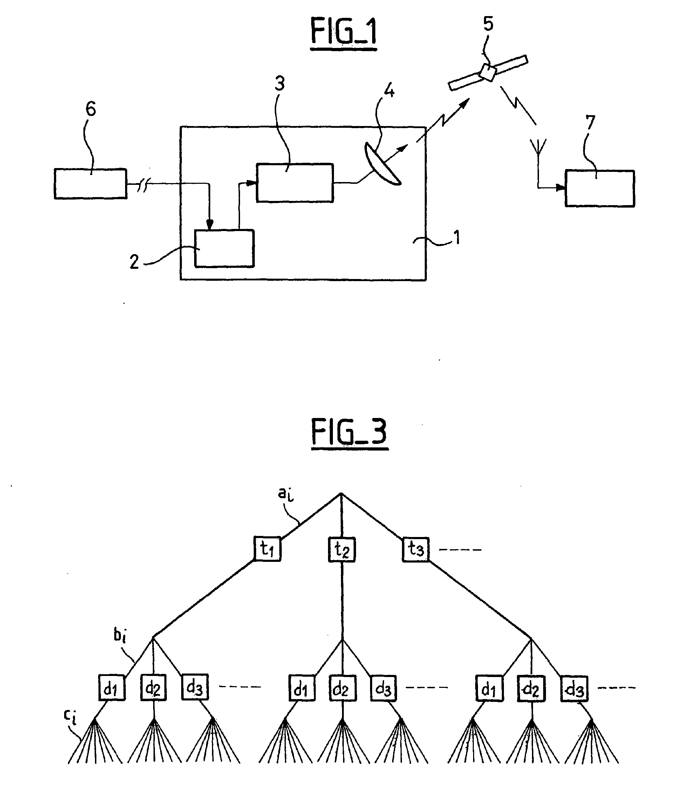

Le récepteur est intégré dans un système tel que représenté à la figure 1. Ce système comprend une infrastructure matérielle constituée par une «gateway» 1, c'est-à-dire un ensemble comprenant un serveur de diffusion 2, une chaîne de transmission 3 et une antenne 4. L'infrastructure comporte également un satellite ou une constellation de satellites 5 aptes à répercuter les signaux reçus de la station émettrice vers différents récepteurs 7 répartis dans une région donnée ou sur la totalité de la planète. Les récepteurs 7 sont présents en un nombre illimité en différents points de la région couverte par les satellites. Un seul récepteur 7 a été représenté à la figure 1. On notera que la liaison entre la gateway et le récepteur ne doit pas nécessairement passer par le satellite, et peut se faire uniquement par des relais terrrestres non représentés.

Le traitement des contenus d'information par ce système est le suivant.

Initialement, les conttenus sont produits par des unités de production 6.

Pour faciliter la compréhension, la suite de la description sera basée sur des contenus constituant des programmes radiophoniques, ci-après désignés «émissions».

Les émissions sont classées par les unités de production, puis sont stockées dans le serveur de diffusion 2, qui les transmet aux satellites 5 aux moments de meilleure disponibilité du réseau.

Il est aisé de comprendre qu'il existe des périodes de moindre utilisation du réseau, notamment entre 0 et 8 heures du matin.

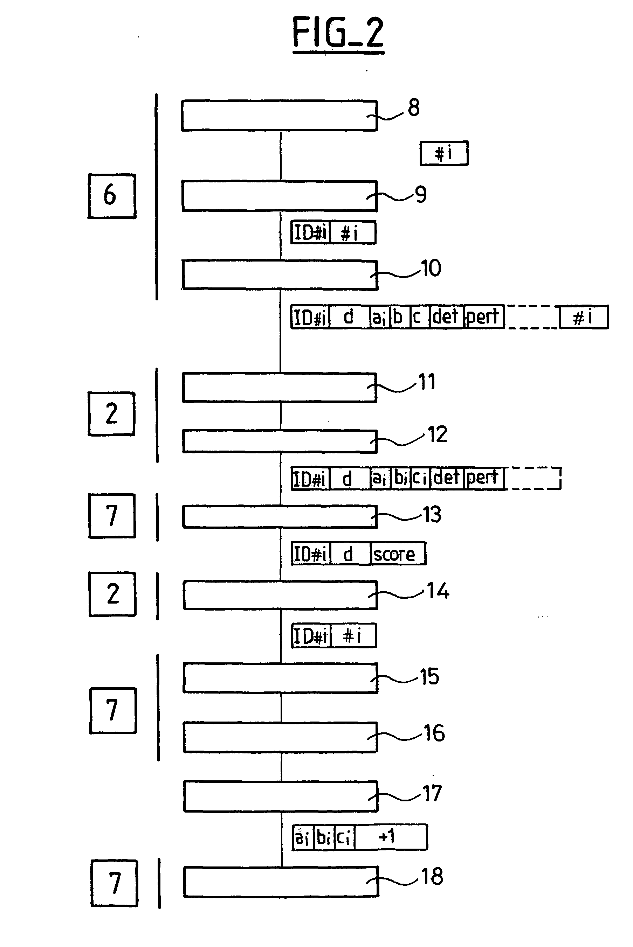

De façon plus détaillée, le traitement des contenus est illustré à la figure 2, où chaque bloc, référencé 8 à 18, correspond aux étapes suivantes.

Etapes 8,9 : Les unités de production réalisent des émissions [#i] auxquelles sont attribués des identificateurs [ID#i]. Chaque émission ou contenu est segmenté en un certain nombre de blocs élémentaires pour l'adaptation à la couche de transport.

Etape 10 : Pour chaque émission, un vecteur de description de l'émission est généré. Ce vecteur de description comporte des paramètres qui sont utilisés pour optimiser l'exploitation des ressources de transmission du système et pour filtrer les contenus les plus pertinents au niveau du récepteur.

Ce vecteur comprend notamment :

- l'identificateur du contenu (l'émission) [ID#i],
- la durée [d] de l'émission (pour les contenus audio et vidéo),
- une indication du classement de l'émission $[a_i, b_i, c_i]$ ; l'arborescence de classification peut être par exemple une arborescence DDC ("Dewey Decimal Classification" en anglais) utlisée par la bibliothèque du congrès américain couvrant tous les domaines du savoir. D'autres modèles sont bien entendu prévus qui sont plus appropriés à l'identification de contenus multimedia.
- le niveau de détail [det] représentatif du détail de traitement de l'information,
- une note de pertinence [pert] du classement de l'émission,
- l'étendue de l'audience attendue : zone géographique, groupe multicast, etc,
- la priorité associée au contenu: urgente, retard garanti, aussitôt que possible, etc,
- qualité de livraison de contenu : très importante, importante, qualité dite "best normal", qualité du mieux possible ("best effort" en anglais),
- la taille du contenu,
- le type de contenu et le type d'encodage (standards tels que window, real time players) : parole, audio, texte, données, vidéo de basse qualité, vidéo de haute qualité,
- le language : le système S-DMB couvrira en l'occurrence toute l'Europe,
- le type de chiffrement : contenu librede chiffrement ou chiffré,
- le seuil de tolérance : pourcentage d'erreurs tolérées pour le fonctionnement acceptable,
- la date d'expiration du contenu,
- une indication de droits de propriété intellectuelle ou copyright,
- la propriété/l'origine de ce contenu
  etc.
- et enfin, est généré l'élément de programme [#i] proprement dit.

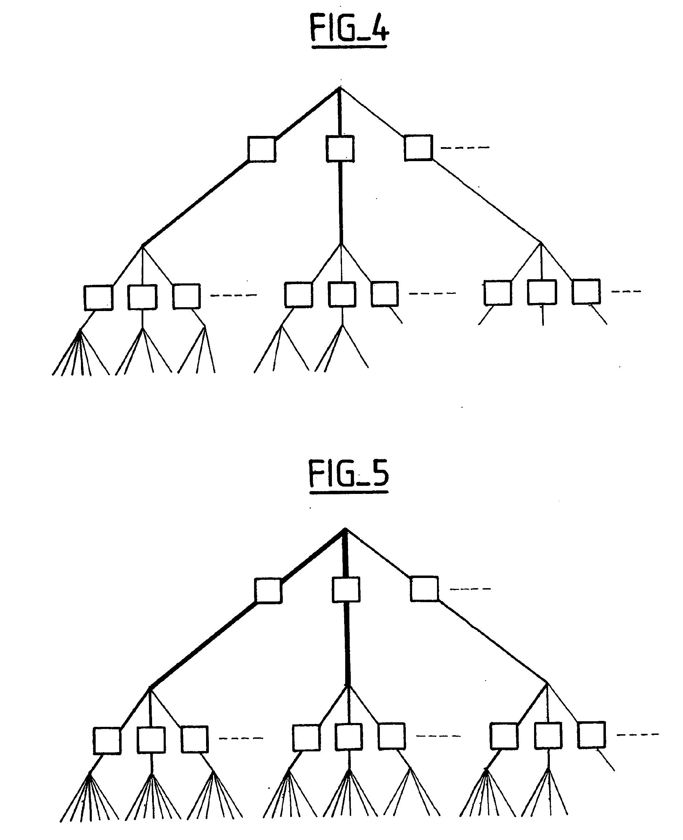

Le classement de l'émission, dans l'exemple décrit, consiste à la positionner dans une arborescence telle que celle représentée aux figures 3, 4 et 5.

Dans l'exemple considéré, la structure de classement utilisée comprend trois niveaux d'arborescence.

A la racine, l'arborescence réunit tous les types de programmes susceptibles de constituer des émissions radiophoniques.

Sur la figure 3, on a représenté trois branches correspondant à ce premier niveau d'arborescence. Chaque branche, référencée $t_1, t_2, t_3$, correspond à un type de programme particulier, par exemple : émissions d'informations, émissions culturelles, programme musical.

Au deuxième niveau d'arborescence, chaque type de programme $t_1, t_2, t_3$, est divisé en domaines dont trois, $d_1, d_2, d_3$, ont été ici représentés.

Dans le type de programmes des émissions d'information, trois domaines peuvent être considéré par exemple : information politiques, informations sportives, informations culturelles.

Chaque domaine d'informations se subdivise à son tour en secteurs, ce qui constitue un troisième niveau d'arborescence.

Comme on le voit à la figure 2, le classement d'une émission par son positionnement au sein de la structure de classification s'exprime en l'occurrence par un pointeur constitué par trois références $a_i, b_i, c_i$, dont chacune correspond à un niveau d'arborescence.

Au classement au sein de la structure sont associés l'indication de niveau de détail représentatif du degré de détail avec lequel l'information dans le contenu est traitée, par exemple 1 pour présentation sommaire à 3 pour analyse très détaillée, et la note de pertinence, qualifiant la validité de ce classement au niveau de la classe considérée.

Etape 11 : Tous les programmes ainsi générés avec leurs vecteurs de description sont stockés dans la «gateway» 1 pour diffusion par le réseau de satellites 5.

Etape 12 : Seuls les vecteurs de description définis ci-dessus sont diffusés. Les vecteurs de description permettent de préciser les caractéristiques des contenus qui vont être diffusés.

Etape 13 : Chaque récepteur ou terminal utilisateur réceptionne les vecteurs de description et extrait une donnée statistique représentative du nombre et de la durée des accès déjà opérés par l'utilisateur sur la classe considérée. Il utilise pour cela le pointeur [$a_i$, $b_i$, $c_i$] fourni par le vecteur de description, pointeur utilisé pour accéder à la table statistique construite par le récepteur. Cette table peut ne pas présenter les trois niveaux pour la branche considérée, ce qui est le cas notamment pour les branches peu exploitées par l'utilisateur ou en début d'apprentissage, lors des premières exploitations du dispositif par l'utilisateur; l'évaluation repose alors sur les statistiques d'accès de niveau inférieur [$a_i$, $b_i$], voire [$a_i$], pondéré par l'écart de niveau d'arborescence.

Il en résulte une évaluation du contenu, constituée de plusieurs valeurs statistiques en cas de vecteur de description multiple (cas où plusieurs classes sont concernées) ; dans ce cas, la valeur statistique retenue est la valeur la plus élevée, une fois pondérée par la note de pertinence. La valeur statistique pondérée résultante est qualifiée de score du contenu.

Chaque score est représentatif de l'intérêt que l'utilisateur est susceptible de porter à l'émission portant ce contenu.

Le processus d'évaluation des contenus consiste en conséquence à prendre en compte le poids du contenu, fonction de la branche à laquelle appartient le contenu (identifiée dans le vecteur de description), le poids pouvant être fourni par une table de correspondance poids - adresse du contenu dans l'arborescence, et le facteur ou note de pertinence du contenu, précisé au sein du vecteur de description (entre 0.1 et 10, typiquement 1). Le score est obtenu par la formule :

$$\text{score de pertinence du contenu} \ = \ w_{i.j.k} \ . \ \text{pertinence du contenu, } w_{i.j.k}$$

représentant le poids de ce contenu.

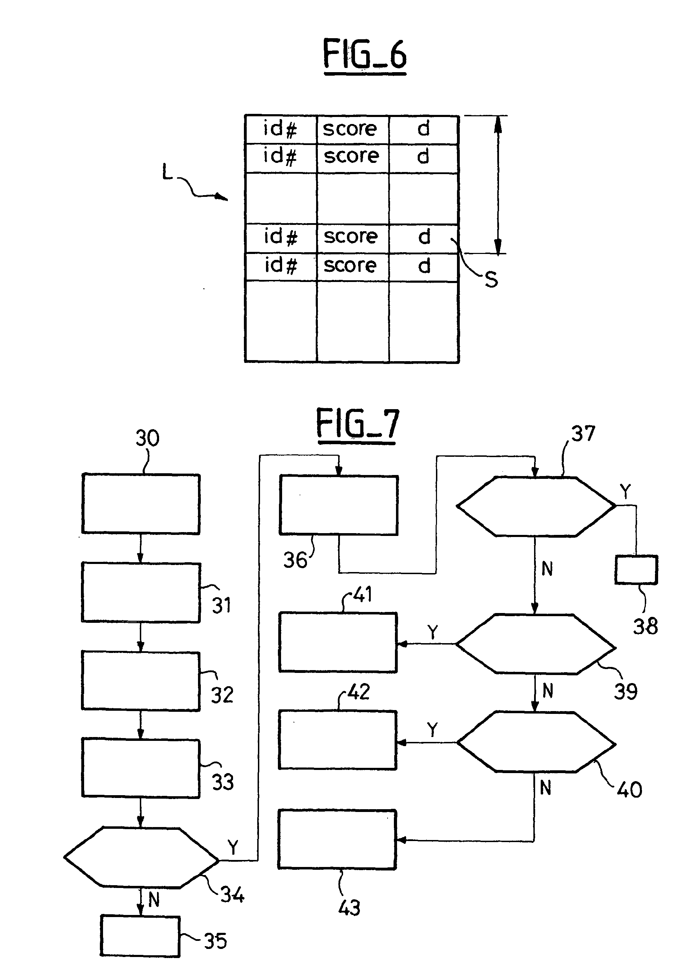

Les vecteurs de description sont ensuite triés par score décroissant, ainsi que représenté par la figure 6.

Un seuil S est déterminé dans le récepteur, exprimant la capacité de stockage réservée dans le récepteur pour les émissions reçues.

Dans la table de la figure 6, on additionne les durées des différentes émissions triées par score décroissant.

La sélection des émissions consiste à retenir, par ordre de score décroissant, celles dont la somme des durées s'inscrit dans la capacité de stockage, telle que définie par le seuil S.

Une fois que la liste L des émissions à retenir est établie, le récepteur est prêt à recevoir les émissions.

La réception ultérieure de vecteurs de description, par exemple associés à des contenus d'information récents (actualité), est prise en compte en suivant le même processus, les contenus éventuellement déjà stockés étant écrasés par des contenus présentant un score plus élevé.

Etape 14 : La diffusion des émissions sous forme de blocs de transmission s'effectue globalement à destination de tous les récepteurs. Il est bien entendu qu'une émission est constituée d'une pluralité de blocs ou d'un bloc dans le cas d'une très courte émission. Le réseau de satellites 5 diffuse, dans toute la zone de couverture, chacune des émissions produites par les unités de production sous forme desdits blocs.

Etape 15 : Chaque récepteur stocke localement les émissions dont il a préalablement sélectionné les vecteurs de description.

Etape 16 : A la fin de la diffusion de toutes les émissions, chaque récepteur contient un programme personnalisé déterminé par son profil d'utilisateur. Afin d'assurer une certaine cohérence à la présentation des contenus à l'utilisateur, le séquencement des émissions pour la phase de consultation est opéré en fonction de critères qui peuvent être définis par les unités de production ou par l'utilisateur en fonction de ses préférences : simplement par domaine et par score décroissant au sein du domaine considéré.

Etape 17 : L'utilisateur peut alors consulter les émissions mémorisées localement dans le récepteur. Chaque émission est présentée à l'utilisateur par l'intermédiaire d'une interface adaptée non représentée, permettant de passer d'une émission à une autre et de sélectionner celle désirée pour son exécution.

Par conséquent, on comprend aisément selon l'esprit de ce qui a été exposé ci-dessus que plus le score de pertinence associé à un contenu reçu est élevé, plus il y a intérêt à sauvegarder ce contenu dans la mémoire cache du récepteur. En revanche un contenu avec un faible score sera plus facilement supprimé car le risque qu'il intéresse l'utilisateur sera faible.

On notera que le vecteur de description sera transmis sur un canal faisant l'objet d'une très haute protection pour offrir la plus grande garantie d'acheminement aux utilisateurs.

On aborde désormais ce qui fait plus particulièrement la problématique de l'invention. Parmi les contenus sélectionnés pour être conserver en mémoire, certains seront reçus de façon partielle. Cette réception partielle de contenus sera due, la plupart du temps, à l'obstruction du lien descendant vers le récepteur (lien satellite-récepteur ou lien station terrestre-récepteur) par un obstacle physique (immeubles, etc). Dans ces conditions, la transmission de ces contenus souffriront de la non-réception de certains des blocs les constituant.

En vue de rémedier au problème soulevé ci-dessus, l'invention prévoit d'utiliser la voie retour (satellite ou lien terrestre) pour récupérer les blocs manquants, en accès individuel auprès du serveur de diffusion des contenus.

Judicieusement, au lieu de solliciter l'accès individuel via la voie retour de façon automatique dès lors qu'un bloc est manquant, la priorité de cette récupération est, selon l'invention, indexée sur le score de pertinence associé au contenu auquel appartient le bloc manquant.

Ainsi, suivant la valeur du score (parmi les contenus sélectionnés), on effectuera la récupération :

- de façon immédiate pour un score élevé.
- pendant les heures creuses du réseau cellulaire terrestre pour un score moyen. On comprend en effet que le coût d'une diffusion par la gateway peut être grandement réduit en procédant à la diffusion générale de tous les contenus aux moments de moindre utilisation du réseau. De cette manière, l'utilisateur n'a plus à supporter le coût élevé d'une connexion longue pendant les périodes de pointe et l'exploitant du réseau peut mettre à profit son infrastructure aux heures creuses.
- Sur demande d'accès au contenu : pour un score faible. En effet, si un contenu a un score de pertinence faible, cela traduit un faible intérêt statistique que lui porte l'utilisateur. En conséquence, la récupération du ou des blocs manquants s'effectuera sur consultation par l'utilisateur du contenu associé.

Cette façon de récupérer les blocs manquants peut être schématisée selon l'organigramme de la figure 7. Celle-ci représente l'organigramme correspondant à l'algorithme de décision de récupération de blocs manquants selon l'invention.

Il y est illustré une première étape 30 de réception du vecteur de description associé à un contenu déterminé.

A cette étape suit une étape 31 d'estimation du score de pertinence de ce contenu, suivie d'une étape 32 de décision de sélection. Cette sélection suit les critère mentionnés ci-dessus.

Une étape d'attente 33 du bloc descendant associé au vecteur s'enchaîne, jusqu'à réception de celui-ci.

Un premier test 34 survient alors pour déterminer si le bloc reçu appartient au contenu sélectionné.

Si ce bloc n'appartient pas à un contenu sélectionné, l'événement 35 de non prise en compte de ce bloc apparaît.

Si, au contraire, le bloc appartient à un contenu sélectionné, on passe à une étape 36 de stockage du bloc avec les autres éventuels blocs déjà stockés.

L'étape 36 est suivie d'un test 37 de vérification de la réception de tous les blocs correspondant au contenu concernant i pendant la durée de transmission théorique d. La durée de transmission comprend la phase de correction d'erreurs FEC et les éventuelles retransmissions de redondances.

Si le test est positif, l'algorithme se termine (étape 38), aucun bloc n'étant manquant et donc aucune récupération n'étant nécessaire.

Par contre, si le test est négatif, un test 39 de calcul est réalisé. Si le score de pertinence du contenu #i est supérieur ou égal au seuil de décision de récupération immédiate, une étape 41 de récupération immédiate des blocs manquants est déclenchée .

A l'opposé, dans le cas où le score de pertinence du contenu #i est inférieur au seuil de décision de récupération immédiate, un autre test 40 est mis en oeuvre. Celui-ci consiste à comparer le score de pertinence au seuil de décision de charge basse correspondant à une récupération pendant les heures creuses du réseau cellulaire. Si le score de pertinence du contenu #i est supérieur ou égal au seuil de décision de récupération pendant les heures creuses, une étape 42 de récupération pendant les heures creuses est déclenchée .

Mais, dans le cas où le score de pertinence du contenu #i est inférieur au seuil de décision de récupération pendant les heures creuses, la récupération ne se réalise uniquement selon un événement 43 de récupération du bloc sur requête du contenu par l'utilisateur.

On notera que cet algorithme est implémenté dans le logiciel du récepteur et que le récepteur comporte les moyens adéquats pour extraire le vecteur de description, pour l'interpréter et le traiter.

Comme il a été vu précédemment, plusieurs seuils de décision sont identifiés, correspondant à :

- la sélection du contenu pour conservation dans le cache local,
- la récupération immédiate des blocs manquants,
- la récupération pendant les heures creuses du réseau cellulaire,
- la récupération sur accès de l'utilisateur au contenu.

Ces seuils peuvent être mis à jour de façon dynamique en fonction de différents paramètres:

- le taux de remplissage de la mémoire locale du terminal,
- le score de pertinence des contenus présents dans le cache (moyen, max, min, répartition),
- la durée de stockage par rapport à la durée de vie et date de réception des contenus.

Ainsi, les décisions seront prises en comparant le score de pertinence du contenu à ces seuils.

On notera que la décision de sélection pourra s'accompagner d'un processus d'écrasement de quelques contenus stockés.

On soulignera également que la mise en oeuvre du procédé de transmission optimisé dans l'émetteur et le récepteur peut se faire de manière entièrement logicielle.

Ainsi, la méthode de récupération de blocs manquants selon l'invention et le récepteur incorporant des moyens de mise en oeuvre d'une telle méthode offre notamment les avantages suivants :

- une réduction de bande passante : cette méthode permet de réduire le nombre de récupération individuelle via le réseau terrestre pour un niveau donné de protection sur le segment satellite. Cette réduction de bande passante peut s'appliquer au segment satellite dans la mesure où il est possible d'ajuster le niveau de protection sur le segment satellite pour un volume de récupérations individuelles souhaité.
- une transparence pour l'utilisateur : Le temps d'accès au contenu sélectionné pour mise en cache reste statistiquement inchangé.
- en outre, cela constitue un moyen simple pour obtenir des informations sur l'audience de certain contenus sans que cela remette en question la vie privée de l'utilisateur. En effet, con obtient des informations d'intérêt de chaque utilisateur sur les contenus émis par simple analyse des accès de récupération de blocs manquants.

Les modes de mise en oeuvre décrits ci-dessus ne sont aucunement limitatifs. Ils sont fournis pour mieux faire comprendre l'invention, la portée de cette invention étant définie par les revendications annexées.

Le réseau de radiocommunications dans lequel est mis en oeuvre l'invention peut être terrestre (c'est à dire comportant uniquement des stations terrestres) et/ou à satellite.

**Revendications**

1. Procédé de transmission optimisé de contenus multimédia entre un émetteur (4) pour la diffusion de contenus multimedia et un récepteur mobile (7) de ces contenus multimedia, ledit procédé comportant :

   - une étape de transmission de l'émetteur (4) et à destination du récepteur mobile (7), d'un vecteur de description d'un contenu multimédia
   - une étape de calcul d'un score de pertinence de ce contenu provenant du vecteur de description et établi en fonction d'un profil d'utilisateur associé à l'utilisateur du récepteur mobile (7),

   ledit procédé étant **caractérisé en ce qu'**il comporte une étape de récupération du ou des blocs du contenu non reçus par le récepteur mobile (7) sur requête explicite du récepteur mobile (7), la priorité de cette récupération étant indexée sur le score de pertinence associé au contenu auquel appartient le bloc manquant.

2. Procédé selon la revendication 1, **caractérisé en ce que** l'étape de récupération est déclenchée selon une valeur du score associée au contenu, étant donné que toute valeur supérieure ou égale à un premier seuil dit score maximum entraîne la récupération immédiate à la détection de blocs non reçus (41), toute valeur inférieure au score maximum mais supérieure ou égale à un second seuil dit score moyen provoque la récupération des blocs manquants à des heures préprogrammées considérées de moindre charge pour le réseau (42), et toute valeur inférieure au score moyen mais supérieure ou égale à une troisième valeur dit score minimum n'entraîne la récupération des blocs manquants que sur requête d'accès du contenu par l'utilisateur (43).

3. Procédé selon la revendication 2, **caractérisé en ce que** lesdits seuils sont mis à jour de façon dynamique en fonction du taux de remplissage d'une mémoire locale du récepteur mobile (7) de manière à ce que la somme des tailles mémoires nécessaire à l'enregistrement des contenus reçus dans une mémoire cache soit inférieure à la capacité de la mémoire cache.

4. Procédé selon l'une des revendications 1 à 3, **caractérisé en ce que** l'étape de récupération n'est déclenchée que suite à une détection de blocs manquants consécutivement à une période prévue de réception de tous les blocs relatifs au contenu.

5. Procédé selon l'une des revendications 1 à 4, **caractérisé en ce que** le profil utilisateur reflétant les centres d'intérêt de l'utilisateur du récepteur mobile (7) est actualisé de façon automatique sur la base des accès de l'utilisateur aux contenus reçus.

**EP 1 367 765 B1**

## Claims

1. Optimised method for the transmission of multimedia contents between a multimedia content transmitter (4) and a mobile multimedia content receiver (7), which method includes the following steps:

   - a step of transmitting a multimedia content description vector from the transmitter (4) to the mobile receiver (7),
   - a step of calculating a pertinence score of said content from the description vector and as a function of a user profile associated with a user of the mobile receiver (7),

   said method being **characterised in that** it includes a step of recovering, at the explicit request of the mobile receiver (7), a block or blocks of the content not received by the mobile receiver (7), with a priority depending on the pertinence score associated with the content to which the missing block(s) belong(s).

2. Method according to claim 1, **characterised in that** the recovery step is started according to a value of the score associated with the content, whereby any value greater than or equal to a first threshold referred to as a maximum score leads to immediate recovery on detection of blocks not received (41), any value less than the maximum score but greater than or equal to a second threshold referred to as an average score causes the recovery of missing block(s) at preprogrammed times when the load on the network (42) is considered to be less, and any value less than the average score but greater than or equal to a third value referred to as a minimum score leads to missing block recovery only when the user (43) requests access to the content.

3. Method according to claim 2, **characterised in that** the thresholds are updated dynamically as a function of the degree to which a local memory of the mobile receiver (7) is filled so that the sum of the memory sizes needed to store contents received in a cache memory is less than the capacity of the cache memory.

4. Method according to any of claims 1 to 3, **characterised in that** the recovery step is initiated only after detection of missing blocks subsequent to an expected period of reception of all blocks relating to the content.

5. Method according to any of claims 1 to 4, **characterised in that** the user profile reflecting interests of the user of the mobile receiver (7) is updated automatically on the basis of access by the user to received contents.

## Patentansprüche

1. Verfahren zur optimierten Übertragung von Multimediainhalten zwischen einem Sender (4) zum Versand von Multimediainhalten und einem mobilen Empfänger (7) dieser Multimediainhalte, wobei das genannte Verfahren umfasst:

   - einen Schritt zur Übertragung eines Beschreibungsvektors für einen Multimediainhalt vom Sender (4) an den mobilen Empfänger (7),
   - einen Schritt zur Berechnung eines Relevanzwertes dieses Inhalts, der vom Beschreibungsvektor stammt und in Abhängigkeit von einem Nutzerprofil erstellt wird, das dem Nutzer des mobilen Empfängers (7) zugeordnet ist,

   wobei das genannte Verfahren **dadurch gekennzeichnet ist, dass** es einen Schritt zur Regeneration eines oder mehrerer Blöcke des Inhalts umfasst, der/die von dem mobilen Empfänger (7) nicht empfangen wurde/-n, und zwar auf eine explizite Anfrage des mobilen Empfängers (7) hin, wobei die Priorität dieser Regeneration mit dem Relevanzwert gekoppelt ist, der dem Inhalt, zu dem der fehlende Block gehört, zugeordnet ist.

2. Verfahren gemäß Anspruch 1, **dadurch gekennzeichnet, dass** der Schritt zur Regeneration entsprechend einem dem Inhalt zugeordneten Relevanzwert ausgelöst wird, in Anbetracht der Tatsache, dass jeder Wert größer oder gleich einem ersten Grenzwert, dem so genannten Höchstwert, die sofortige Regeneration zur Erfassung von nicht empfangenen Blöcken (41) zur Folge hat, jeder Wert unter dem Höchstwert, jedoch größer oder gleich einem zweiten Grenzwert, dem so genannten Mittelwert, die Regeneration von fehlenden Blöcken zu vorprogrammierten Zeiten auslöst, in denen die Auslastung des Netzes (42) als gering betrachtet wird, und jeder Wert unter dem Mittelwert, jedoch größer oder gleich einem dritten Grenzwert, dem so genannten Mindestwert, die Regeneration von fehlenden Blöcken nur auf eine Zugriffsanfrage auf den Inhalt durch den Nutzer (43) verursacht.

3. Verfahren gemäß Anspruch 2, **dadurch gekennzeichnet, dass** die genannten Grenzwerte in Abhängigkeit von dem Belegungsgrad eines lokalen Speichers im mobilen Empfänger (7) dynamisch aktualisiert werden, so dass der Gesamt-Speicherplatz, der zur Speicherung der empfangenen Inhalte in einem Cache-Speicher erforderlich ist, unter der Kapazität des Cache-Speichers liegt.

4.  Verfahren gemäß einem der Ansprüche 1 bis 3, **dadurch gekennzeichnet, dass** der Schritt zur Regeneration nur nach der Erfassung von fehlenden Blöcken im Anschluss an einen Zeitraum ausgelöst wird, der für den Empfang aller Blöcke in Bezug auf den Inhalt vorgesehen war.

5.  Verfahren gemäß einem der Ansprüche 1 bis 4, **dadurch gekennzeichnet, dass** das Nutzerprofil, das die Interessensgebiete des Nutzers des mobilen Empfängers (7) widerspiegelt, automatisch auf der Basis der Zugriffe des Nutzers auf die empfangenen Inhalte aktualisiert wird.

## FIG_1

## FIG_3

# FIG_2

## FIG_4

## FIG_5

# FIG_6

| id# | score | d |
|-----|-------|---|
| id# | score | d |
|     |       |   |
| id# | score | d |
| id# | score | d |
|     |       |   |

L

S

# FIG_7

30

31

32

33

34 Y N

35

36

37 Y

38 N

39 Y 41 N

40 Y 42 N

43